# EUROPÄISCHE PATENTANMELDUNG

(11) **EP 2 056 140 A2**
(43) Veröffentlichungstag der Anmeldung: **06.05.2009**
(21) Anmeldenummer: 08167649.6
(22) Anmeldetag: 27.10.2008
(51) Int. Cl.: G02B 6/25

(54) **Trenngerät für mindestens einen Lichtwellenleiter und Verfahren zum Durchtrennen mindestens eines Lichtwellenleiters**

(30) Priorität: 31.10.2007 DE 202007015180 U
(71) Anmelder: CCS Technology, Inc., Wilmington, DE 19803 (US)
(72) Erfinder: Präcklein, Doris, 82008, Unterhaching (DE); Kossat, Rainer, 83229, Aschau (DE)
(74) Vertreter: Epping - Hermann - Fischer

(57) **Zusammenfassung**

Ein Trenngerät (100) weist einen Grundkörper (101) auf, auf dem ein Amboss (102) angeordnet ist. An dem Grundkörper sind eine Aufnahmevorrichtung (103) für mindestens einen Lichtwellenleiter und eine Trenneinheit (104) beweglich befestigt.

Die Aufnahmevorrichtung weist Klemmbacken (106, 107) und eine Transporteinheit (109) und einen Sammelbehälter (111) auf.

Durch eine Bewegung der Trenneinheit und der Aufnahmevorrichtung in Richtung des feststehenden Grundkörpers wird der mindestens eine Lichtwellenleiter angeritzt und auf den Amboss gedrückt. Dadurch wird der mindestens eine Lichtwellenleiter gebrochen.

## Beschreibung

Die Erfindung betrifft ein Trenngerät für mindestens einen Lichtwellenleiter sowie ein Verfahren zum Durchtrennen mindestens eines Lichtwellenleiters.

Lichtwellenleiter werden im Allgemeinen getrennt, indem sie an einer Trennstelle angeritzt werden und danach durch Biegen an dieser Stelle gebrochen werden. Die Endflächen des Lichtwellenleiters sollten nach dem Brechen möglichst plan sein. Dies ist für weitere Arbeitsschritte, beispielsweise ein Verspleißen, bei dem zwei Lichtwellenleiter thermisch verbunden werden, erforderlich, um eine möglichst geringe Dämpfung an der Kuppelstelle zu erreichen.

Es sind Trenngeräte für Lichtwellenleiter bekannt, die eine Bodenplatte aufweisen, mit der die Trenngeräte auf eine Unterlage gestellt werden. Die Bodenplatte enthält ein Trennmesser. Es können ein Behälter und eine Vorrichtung angebaut sein, die abgetrennte Teile der Lichtwellenleiter in den Behälter transportiert. An der Bodenplatte ist ein Spannarm angebracht. Der Spannarm umfasst einen Amboss, der von oben auf den Lichtwellenleiter gedrückt werden kann. Zudem weist das Trenngerät Klemmanordnungen auf, die sowohl an dem Spannarm als auch auf der Bodenplatte montiert sind.

Zum Trennen des Lichtwellenleiters wird der Lichtwellenleiter in das Trenngerät eingelegt und durch eine Bewegung des Spannarms von den Klemmanordnungen im Trenngerät festgehalten und von dem Trennmesser an der Stelle, an der Lichtwellenleiter getrennt werden soll, angeritzt. Daraufhin wird durch den Amboss von oben Druck auf die angeritzte Stelle ausgeübt, so dass der Lichtwellenleiter bricht. Gegebenenfalls wird der abgetrennte Teil des Lichtwellenleiters von der dafür vorgesehenen Vorrichtung in den Behälter transportiert.

In der US 6 598 774 wird ein Trenngerät beschrieben, bei dem ein abgetrennter Teil eines Lichtwellenleiters automatisch in einen Behälter befördert wird.

Bei den herkömmlichen Trenngeräten können abgetrennte Teile des Lichtwellenleiters in die Trenneinheit fallen und diese beschädigen. Zudem kann der Lichtwellenleiter beschädigt werden, indem er das Trennmesser berührt, da er über den gesamten Vorgang nahe am Trennmesser geführt wird.

Es ist Aufgabe der Erfindung ein Trenngerät für mindestens einen Lichtwellenleiter anzugeben, das funktionssicher arbeitet. Es ist eine weiter Aufgabe der Erfindung ein Verfahren zum Durchtrennen mindestens eines Lichtwellenleiters anzugeben, das funktionssicher ist.

Diese Aufgabe wird gelöst durch ein Trenngerät mit den Merkmalen des Anspruchs 1 beziehungsweise einem Verfahren mit den Merkmalen des Anspruchs 14.

Ein Trenngerät für mindestens einen Lichtwellenleiter weist einen Grundkörper auf, der eine Standfläche bildet. Auf diesem Grundkörper ist ein Amboss angeordnet. Relativ zu dem Grundkörper beweglich ist eine Aufnahmevorrichtung für den mindestens einen Lichtwellenleiter sowie eine Trenneinheit für mindestens einen Lichtwellenleiter angeordnet. Die Aufnahmevorrichtung ist oberhalb des Grundkörpers und die Trenneinheit oberhalb der Aufnahmevorrichtung angeordnet. Zudem hat das Trenngerät eine Transporteinheit und einen Behälter für abgetrennte Teile eines Lichtwellenleiters. Die Transporteinheit kann einen abgetrennten Teil des mindestens einen Lichtwellenleiters in den Behälter befördern. Das Trenngerät weist mindestens zwei Klemmanordnungen mit jeweiligen Klemmbacken auf. Von den mindestens zwei Klemmanordnungen ist jeweils eine Klemmbacke an der Trenneinheit angeordnet und jeweils eine weitere an der Aufnahmevorrichtung. Der zu trennende Lichtwellenleiter kann in dem Trenngerät von den mindestens zwei Klemmanordnungen fixiert werden.

Die Transporteinheit ist in einer Ausführungsform durch eine Bewegung der Trenneinheit oder eine Bewegung der Aufnahmevorrichtung antreibbar. Die Transporteinheit kann auch durch eine Bewegung der Trenneinheit und eine Bewegung der Aufnahmevorrichtung antreibbar sein.

Der Amboss kann fest mit dem Grundkörper verbunden sein. Die Aufnahmevorrichtung und die Trenneinheit sind in einer Ausführungsform der Erfindung drehbar um eine relativ zum Grundkörper feststehende Achse beweglich. Die Drehachse ist beispielsweise im Wesentlichen parallel zu der Längsrichtung des Lichtwellenleiters. Sowohl die Trenneinheit als auch die Aufnahmevorrichtung weisen jeweils eine offene Position auf, in der der mindestens eine Lichtwellenleiter in das Trenngerät eingelegt werden kann. Zudem weisen die Trenneinheit und die Aufnahmevorrichtung jeweils eine geschlossene Position auf. Die geschlossene Position ergibt sich, wenn die Trenneinheit und die Aufnahmevorrichtung in Richtung Grundkörper bewegt werden. In einem Ausführungsbeispiel wird die Aufnahmevorrichtung durch die Bewegung der Trenneinheit mitgeführt indem die Trenneinheit von oben auf die Aufnahmevorrichtung drückt.

Es können mindestens zwei Klemmanordnungen in einem Ausführungsbeispiel nebeneinander angeordnet sein und zwar in einer Linie, die parallel zu der Drehachse verläuft. In der Trenneinheit kann sich ein Trennmesser befinden, das zwischen den mindestens zwei Klemmanordnungen angeordnet ist. Beispielsweise ist das Trennmesser ein Trennrad.

Die Transporteinheit kann zwischen einer der mindestens zwei Klemmanordnungen und dem Behälter des Trenngeräts angeordnet sein. Das Trenngerät umfasst in einer Ausführungsform einen Mechanismus, der eine Bewegung der Aufnahmevorrichtung oder der Trenneinheit in eine Antriebsbewegung der Transporteinheit umlenkt. Das Trenngerät umfasst in einer Ausführungsform einen Mechanismus, der eine Bewegung der Aufnahmevorrichtung und der Trenneinheit in eine Antriebsbewegung der Transporteinheit umlenkt. Beispielsweise umfasst die Transporteinheit mindestens zwei rotierbare Walzen, die den abgetrennten Teil des Lichtwellenleiters durch ihre Rotation in den Behälter befördern. In einer Ausführungsform umfasst das Trenngerät einen Mechanismus, der eine Bewegung der Aufnahmevorrichtung oder der Trenneinheit in eine Drehbewegung der Walzen umlenkt. Der Mechanismus kann mindestens eine der zwei Walzen in Rotation versetzen. Der Mechanismus kann die Bewegung der Transporteinheit, der Aufnahmevorrichtung oder beiden in eine Drehbewegung der Walzen umsetzen.

In einer Ausführungsform hat das Trenngerät einen Mechanismus, der die Trenneinheit und die Aufnahmevorrichtung in die jeweils offene Position zurückstellt, wenn sie aus dieser bewegt wurden. Beispielsweise wird dazu die Kraft mindestens einer Feder eingesetzt.

Bei einem Verfahren zum Durchtrennen mindestens eines Lichtwellenleiters wird in einem ersten Schritt die Lage eines Ambosses festgelegt. In einer relativ dazu definierten Lage wird der mindestens eine Lichtwellenleiter fixiert. In einem weiteren Schritt wird der mindestens eine Lichtwellenleiter an einer vorbestimmten Trennstelle angeritzt und diese Trennstelle auf den festgelegten Amboss gedrückt. Der mindestens eine Lichtwellenleiter wird durch das Drücken auf den Amboss gebrochen. In einem nächsten Schritt wird ein abgebrochener Teil des mindestens einen Lichtwellenleiters in einen Behälter transportiert. Das Verfahren kann ein Bewegen des Behälters relativ zu dem mindestens einen Lichtwellenleiter umfassen.

Der mindestens eine Lichtwellenleiter kann beispielsweise durch ein Trennmesser angeritzt werden, das über den mindestens einen Lichtwellenleiter geführt wird. Das Trennmesser kann kreisförmig ausgebildet sein. Der mindestens eine Lichtwellenleiter kann beispielsweise von mindestens zwei Klemmanordnungen fixiert werden und zwar beispielsweise auf einer ersten Seite der vorbestimmten Trennstelle und auf einer zweiten Seite der vorbestimmten Trennstelle. Der mindestens eine Lichtwellenleiter kann von den Klemmanordnungen auf den Amboss gedrückt werden.

Eine Ausführungsform des Verfahrens kann ein Festlegen einer Drehachse im Raum, ein Drehen der mindestens zwei Klemmanordnungen und des Trennmessers um diese Drehachse, ein Festklemmen des mindestens einen Lichtwellenleiters durch die Klemmanordnungen und ein Bewegen des mindestens einen festgeklemmten Lichtwellenleiters in Richtung des festengelegten Amboss umfassen.

Der Verfahrensschritt des Transports des abgetrennten Teils des mindestens einen Lichtwellenleiters in den Behälter kann durch mindestens zwei gegeneinander rotierende Walzen erfolgen. Mindestens eine der mindestens zwei Walzen wird in einer Ausführungsform durch eine Bewegung der Aufnahmevorrichtung, der Trenneinheit oder beiden in Rotation versetzt.

Durch die beschriebene Anordnung der Trenneinheit oberhalb der Aufnahmevorrichtung und beiden oberhalb des Ambosses wird das Risiko einer Beschädigung der Trennradeinheit durch herabfallende, abgetrennte Teile des Lichtwellenleiters reduziert. Des weiteren kann durch den beschriebenen Aufbau die Wahrscheinlichkeit einer ungewollten Beschädigung des Lichtwellenleiters durch des Trennmesser gering gehalten werden, da das Trennmesser, wenn es nicht gerade den Lichtwellenleiter anritzt, in genügend großem Abstand zu diesem angeordnet ist. Durch den Transport der abgetrennten Teile des Lichtwellenleiters in den Behälter wird zudem die Verletzungsgefahr des Benutzers verringert, da abgetrennte Teile des Lichtwellenleiters nicht manuell aufgesammelt werden müssen.

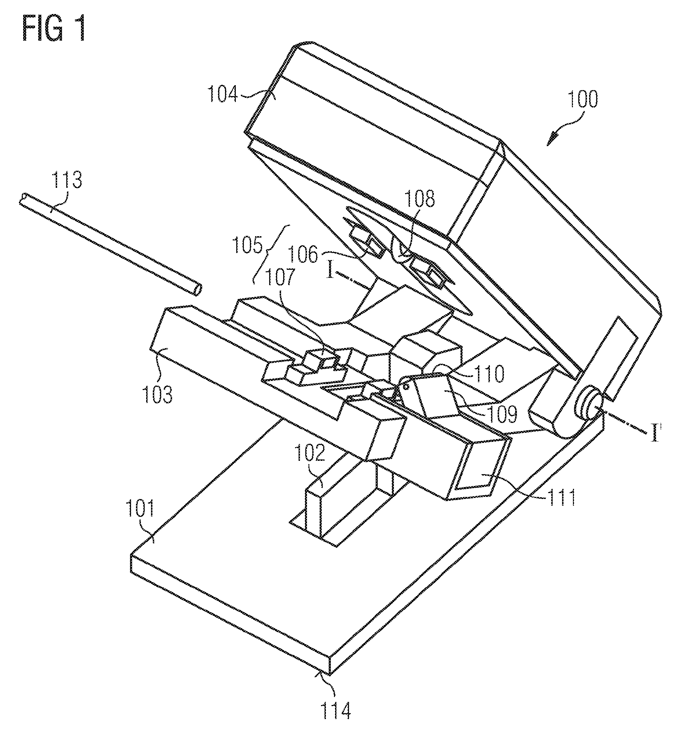

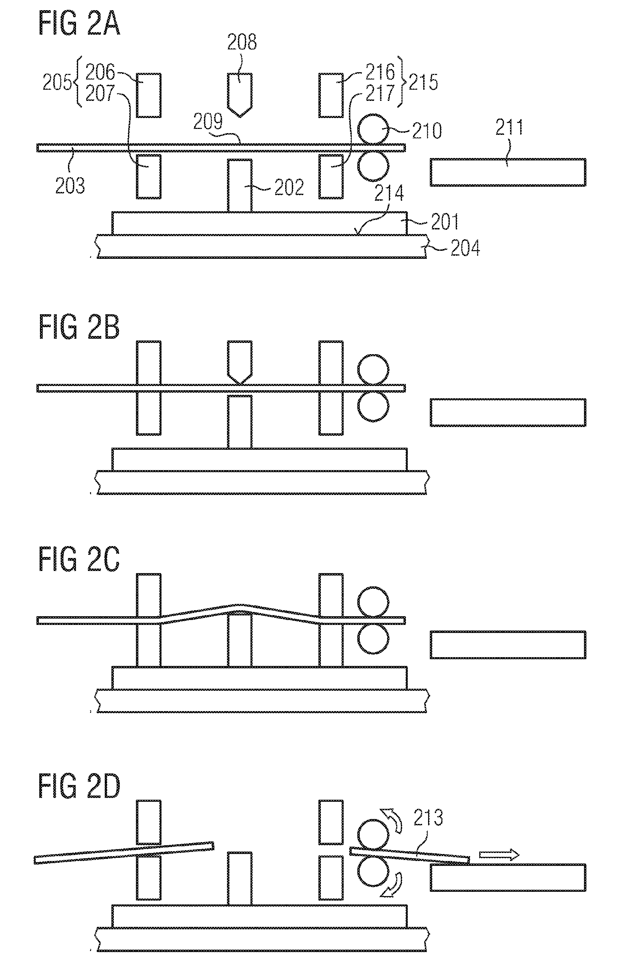

Weitere Merkmale, Vorteile und Weiterbildungen ergeben sich aus den nachfolgenden in Verbindung mit den Figuren 1 und 2 erläuterten Beispielen.

### Es zeigen:

Figur 1 eine schematische Darstellung eines Trenngeräts gemäß einer Ausführungsform, und

Figur 2A bis 2D eine schematische Darstellung eines Ausführungsbeispiels für ein Trennverfahren.

Figur 1 zeigt eine schematische Gesamtdarstellung eines Trenngeräts 100 für mindestens einen Lichtwellenleiter 113. Das Trenngerät weist einen Grundkörper 101 auf, an dem eine Aufnahmevorrichtung 103 für mindestens einen Lichtwellenleiter und eine Trenneinheit 104 befestigt sind.

Der Grundkörper hat eine Standfläche 114, mit der er auf eine Unterlage gestellt werden kann. Auf dem Grundkörper ist ein Amboss 102 angeordnet, der fest mit dem Grundkörper verbunden ist. Der Amboss ist aufrecht auf der Standfläche ausgerichtet, so dass ein zu trennender Lichtwellenleiter in Richtung Grundkörper auf den Amboss gedrückt werden kann, um den Lichtwellenleiter zu brechen. Der Lichtwellenleiter ist in einer Position gezeigt, bevor er in das Trenngerät eingelegt ist. Der Grundkörper weist Drehgelenke auf, um die Aufnahmevorrichtung und die Trenneinheit mit dem Grundkörper beweglich verbinden zu können. Die Drehgelenke sind in einem Randbereich des Grundkörpers angeordnet. So kann mit der Aufnahmevorrichtung und der Trenneinheit eine Hebelkraft erzeugt werden, durch die der Lichtwellenleiter beim Aufdrücken auf den Amboss gebrochen werden kann.

Die Aufnahmevorrichtung ist oberhalb des Grundkörpers angeordnet und an diesem über die Drehgelenke beweglich befestigt. Die Aufnahmevorrichtung weist Klemmbacken 107 auf, die jeweils ein erster Teil von Klemmanordnungen 105 sind. Zudem weist die Aufnahmevorrichtung eine Transporteinheit 109 auf, die rotierbare Walzen 110 hat. Ebenfalls an der Aufnahmevorrichtung ist ein Behälter 111, insbesondere ein Sammelbehälter, angeordnet, in dem abgetrennte Teile von Lichtwellenleitern aus mehreren Trennvorgängen gesammelt werden können. Oberhalb des Ambosses zwischen den Klemmbacken hat die Aufnahmevorrichtung eine Aussparung, so dass der Amboss, wenn die Aufnahmevorrichtung in Richtung Grundkörper bewegt wird, zwischen die Klemmbacken gelangen kann. Die Aufnahmevorrichtung ist über die Drehgelenke mit dem Grundkörper und der Trenneinheit verbunden.

Die Trenneinheit ist oberhalb der Aufnahmevorrichtung angeordnet und mit der Aufnahmevorrichtung und dem Grundkörper durch die Drehgelenke verbunden. Die Trenneinheit weist ein Trennmesser 108 auf, das in dem gezeigten Ausführungsbeispiel die Form eines Rads hat. Das Trennmesser ist zwischen weiteren Klemmbacken 106 angeordnet, die jeweils einen zweiten Teil der Klemmanordnungen 105 bilden. Relativ zu dem Grundkörper ist das Trennmesser oberhalb des Ambosses angeordnet. Die Trenneinheit ist über die Drehgelenke mit dem Grundkörper und der Aufnahmevorrichtung verbunden.

Das Trennmesser ist so in der Trenneinheit befestigt, dass es auf einer Linie, die im Wesentlichen senkrecht zum Lichtwellenleiter verläuft, beweglich ist. Durch die Bewegung senkrecht zum Lichtwellenleiter, kombiniert mit einer Bewegung in Richtung Grundkörper kann der Lichtwellenleiter durch das Trennmesser angeritzt werden.

Die Verbindung des Grundkörpers, der Aufnahmevorrichtung und der Trenneinheit weist eine Achse I - I' durch die Drehgelenke auf. Sowohl die Aufnahmevorrichtung als auch die Trenneinheit sind um diese Achse drehbar. Die Trenneinheit und die Aufnahmevorrichtung weisen jeweils einen Öffnungswinkel im Bezug auf den Grundkörper auf, dessen Scheitelpunkt im Bereich der Drehachse liegt. Der Öffnungswinkel, den die Aufnahmevorrichtung mit dem Grundkörper bildet, ist in einer ersten Position kleiner als der Öffnungswinkel, den die Trenneinheit mit dem Grundkörper bildet. Durch eine Bewegung der Trenneinheit um die Achse I - I' wird der Öffnungswinkel der Trenneinheit verkleinert, bis die Trenneinheit auf die Aufnahmevorrichtung trifft und beide in etwa den gleichen Öffnungswinkel zum Grundelement aufweisen. Dieser Öffnungswinkel wird durch eine Bewegung der Trenneinheit und der Aufnahmevorrichtung weiter verkleinert, bis beide im Wesentlichen parallel zu dem Grundkörper positioniert sind.

Sowohl die Aufnahmevorrichtung als auch die Trenneinheit sind zwischen der gezeigten geöffneten und einer geschlossenen Position beweglich. In der offenen Position haben die Öffnungswinkel einen größeren Wert als in der geschlossenen Position, in der die Winkel zwischen der Trenneinheit, der Aufnahmevorrichtung und des Grundkörpers relativ klein sind.

Die Transporteinheit 109 ist in einer Ausführungsform durch eine Bewegung der Trenneinheit antreibbar. Die Transporteinheit 109 wird durch eine Bewegung der Trenneinheit weg vom Grundkörper 109 angetrieben. Die Transporteinheit 109 kann auch durch eine Bewegung der Aufnahmevorrichtung 103, insbesondere eine Bewegung weg vom Grundkörper 101 angetrieben werden. Die Bewegung der Aufnahmevorrichtung 103 und/oder der Trenneinheit 104 kann in einen Antrieb der Transporteinheit 109 umgelenkt werden. Durch den Antrieb der Transporteinheit 109 durch eine Bewegung der Aufnahmevorrichtung 103 und/oder der Trenneinheit 104 relativ zu dem Amboss 102 kann ein abgetrennter Teil des Lichtwellenleiters in den Sammelbehälter 111 befördert werden.

In der offenen Position kann der mindestens eine Lichtwellenleiter in die Aufnahmevorrichtung eingelegt werden. Der mindestens eine Lichtwellenleiter wird so eingelegt, dass er Kontakt zu den rotierbaren Walzen hat. Um den mindestens einen Lichtwellenleiter zu trennen, wird die Trenneinheit in Richtung Aufnahmevorrichtung bewegt. Beim Auftreffen der Trenneinheit auf die Aufnahmevorrichtung wird der eingelegte mindestens eine Lichtwellenleiter durch die Klemmanordnungen in dem Trenngerät fixiert. Das Trennmesser trifft von oben auf den Lichtwellenleiter und kann senkrecht zur Achse I - I' über den fixierten Lichtwellenleiter bewegt werden und diesen an einer Trennstelle anritzen, also seine Oberfläche einschneiden. In der geschlossenen Position wird der fixierte Lichtwellenleiter so mit der Stelle, an der er angeritzt wurde, auf den feststehenden Amboss aufgedrückt, dass der Lichtwellenleiter bricht.

In einer Ausführungsform können die Trenneinheit und die Aufnahmevorrichtung durch rückstellende Kräfte beispielsweise einer Feder von der geschlossenen in die offene Position bewegt werden. Das Trenngerät kann in einer weiteren Ausführung einen Mechanismus aufweisen, der die Bewegung der Aufnahmevorrichtung oder der Trenneinheit in eine Drehbewegung der Walzen der Transporteinheit umlenkt. Durch die Rotation der Walzen kann ein abgetrennter Teil des Lichtwellenleiters in den Sammelbehälter transportiert werden. Die abgetrennten Teile der Lichtwellenleiter müssen nicht manuell aufgesammelt werden, was das Risiko von Verletzungen des Betreibers durch Teile der Lichtwellenleiter stark verringert. Der Mechanismus kann bei einer Bewegung des Trennmesser weg von dem Lichtwellenleiter angetrieben werden.

Figur 2A zeigt schematisch einen Grundkörper 201 mit einer Standfläche 214, auf dem ein Amboss 202 angeordnet ist, einen Lichtwellenleiter 203, Klemmanordnungen 205 und 215, ein Trennmesser 208, rotierbare Walzen 210 sowie einen Sammelbehälter 211. Die Standfläche liegt auf einer Unterlage 204 auf. Die Klemmanordnungen haben jeweils zwei Klemmbacken 206 und 207, beziehungsweise 216 und 217.

Das Trennmesser ist über dem Amboss und oberhalb einer Trennstelle 209 des Lichtwellenleiters angeordnet. Die Klemmbacken sind jeweils seitlich des Trennmessers und des Ambosses, ober- und unterhalb des Lichtwellenleiters angeordnet. Die Klemmbacken sind parallel zur Längsrichtung des Lichtwellenleiters angeordnet. Die rotierbaren Walzen, die in einem späteren Schritt einen abgetrennten Teil 213 des Lichtwellenleiters abtransportieren, sind seitlich der Klemme 215 angeordnet. Das Trennmesser dient zum Anritzen des Lichtwellenleiters, die Klemmanordnungen sind zum Fixieren des Lichtwellenleiters während des Trennvorgangs.

Der Amboss, der fest mit dem Grundkörper verbunden ist, der mit der Standfläche auf der Unterlage steht, wird während des Trennvorgangs nicht bewegt. Die Klemmbacken, das Trennmesser, der zu trennende Lichtwellenleiter, die Walzen und der Sammelbehälter werden zum Trennen des Lichtleiters relativ zum Amboss bewegt. Das Risiko einer Beschädigung der Trenneinheit oder des Lichtwellenleiters ist so relativ gering. Es können keine abgetrennten Teile in die Trenneinheit fallen, da die Trenneinheit oberhalb des Lichtwellenleiters angeordnet ist. Das Trennmesser befindet sich, außer während es den Lichtwellenleiter anritzt, in einem ausreichend großen Abstand zu dem Lichtwellenleiter. Ungewollte Beschädigungen des Lichtwellenleiters durch das Trennmesser, beispielsweise Kratzer, können vermieden werden.

In Figur 2B wird der Lichtwellenleiter von den Klemmanordnungen festgehalten. Die Klemmbacken 206 und 216 werden von oben in Richtung Klemmbacken 207 und 217 bewegt. Zwischen den Klemmbacken 206 und 207 sowie 216 und 217 befindet sich der Lichtwellenleiter. Die Klemmanordnungen, die den Lichtwellenleiter fixieren, bewegen sich in Richtung Amboss und führen dabei den Lichtwellenleiter mit sich. Die Klemmbacken weisen ein Material auf, das den Lichtwellenleiter beim Festhalten möglichst nicht beschädigt, beispielsweise zerkratzt, und eine möglichst hohe Reibung zwischen dem Lichtwellenleiter und den Klemmbacken bewirkt, damit sich der Lichtwellenleiter relativ zu den Klemmen möglichst wenig bewegt.

Zusammen mit den Klemmbacken 206 und 216 wird das Trennmesser bewegt. Es trifft von oben auf den Lichtwellenleiter und wird senkrecht über den Lichtwellenleiter geführt. Dabei ritzt das Trennmesser den Lichtwellenleiter an einer Trennstelle oberhalb des Ambosses an. Während des weiteren Bewegungsvorgangs wird das Trennmesser von seiner Position unmittelbar oberhalb des Ambosses wegbewegt.

Figur 2C zeigt, wie der mindestens eine Lichtwellenleiter von den Klemmanordnungen niedergedrückt und dabei auf den Amboss gedrückt wird. Die Fläche des Ambosses, auf die der Lichtwellenleiter gedrückt wird, liegt höher, als die Position in die der Lichtwellenleiter von den Klemmanordnungen gebracht wird. Der Lichtwellenleiter wird durch den Amboss und die Klemmanordnungen gebogen.

Der Biegeradius des Lichtwellenleiters ist mindestens so klein, dass die dabei auftretenden Kräfte dazu führen, dass der Lichtwellenleiter an der angeritzten Trennstelle bricht und somit getrennt wird. Die Endflächen des Lichtwellenleiters sollen nach dem Brechen möglichst eben sein, damit beispielsweise ein Verspleißen gut möglich ist und die verspleisste Stelle eine geringe optische Dämpfung aufweist.

In Figur 2D ist der Lichtwellenleiter bereits getrennt und die Klemmbacken sowie die Walzen und der Sammelbehälter bewegen sich von dem Grundkörper weg nach oben. Die Bewegung kann durch eine rückstellende Kraft, beispielsweise von einer Feder, herbeigeführt werden, sobald der Trennvorgang abgeschlossen ist.

Eine Walze kann in Rotation versetzt werden, um einen abgetrennten Teil des Lichtwellenleiters 213 vom Amboss wegzutransportieren, beispielsweise in einen Sammelbehälter. In einer Ausführungsform wird die Walze durch die Bewegung der Klemmbacken oder der Walzen oder beiden von dem Grundkörper weg nach oben hervorgerufen.

In dem Sammelbehälter kann eine Vielzahl von abgetrennten Teilen von Lichtwellenleitern gesammelt werden. Daher ist ein manuelles Aufsammeln der abgetrennten Teile von Lichtwellenleitern nicht erforderlich.

## Patentansprüche

1. Trenngerät (100) für mindestens einen Lichtwellenleiter (113), umfassend:
- einen Grundkörper (101, 201) mit einer Standfläche (214);
- einen Amboss (102), der auf dem Grundkörper (101) angeordnet ist;
- eine Aufnahmevorrichtung (103) für den mindestens einen Lichtwellenleiter (113), die oberhalb des Grundkörpers (101), relativ zu dem Grundkörper (101) beweglich, angeordnet ist;
- eine Trenneinheit (104) für den mindestens einen Lichtwellenleiter (113), die oberhalb der Aufnahmevorrichtung (103), relativ zu dem Grundkörper (101) und zu der Aufnahmevorrichtung (103) beweglich, angeordnet ist;
- eine Transporteinheit (109) für einen abgetrennten Teil (213) des mindestens einen Lichtwellenleiters (113, 203);
- einen Behälter (111) für den abgetrennten Teil (213) des mindestens einen Lichtwellenleiters (113, 203), der mit der Aufnahmevorrichtung (103) verbunden ist;
- mindestens zwei zum Festklemmen des mindestens einen Lichtwellenleiters dienende Klemmanordnungen (105) mit jeweiligen Klemmbacken (106, 107), von denen jeweils eine Klemmbacke (106) an der beweglichen Trenneinheit (104) und jeweils eine weitere Klemmbacke (107) an der beweglichen Aufnahmevorrichtung (103) angeordnet ist.

2. Trenngerät (100) nach Anspruch 1, wobei die Transporteinheit (109) durch eine Bewegung der Trenneinheit (104) und /oder der Aufnahmevorrichtung (103) antreibbar ist.

3. Trenngerät (100) nach Anspruch 1 oder 2, wobei der Amboss (102) fest mit dem Grundkörper (101) verbunden ist.

4. Trenngerät (100) nach einem der Ansprüche 1 bis 3, wobei die Aufnahmevorrichtung (103) um eine bezüglich des Grundkörpers (101) feststehende Achse (I-I') drehbar beweglich ist.

5. Trenngerät (100) nach Anspruch 4, wobei die Trenneinheit (104) um die Achse (I-I') drehbar beweglich ist.

6. Trenngerät (100) nach einem der Ansprüche 1 bis 5, wobei die Aufnahmevorrichtung (103) zwischen einer offenen Position zur Aufnahme des mindestens einen Lichtwellenleiters (113) und einer geschlossenen Position beweglich ist.

7. Trenngerät (100) nach einem der Ansprüche 1 bis 6, wobei die Trenneinheit (104) zwischen einer offenen Position und einer geschlossenen Position beweglich ist.

8. Trenngerät (100) nach einem der Ansprüche 1 bis 7, wobei die Trenneinheit (104) ein Trennmesser (108) umfasst.

9. Trenngerät (100) nach Anspruch 8, wobei das Trennmesser (104) zwischen den mindestens zwei Klemmanordnungen (105) angeordnet ist.

10. Trenngerät (100) nach einem der Ansprüche 1 bis 9, umfassend einen Mechanismus, der eine Bewegung der Aufnahmevorrichtung (103) und/oder der Trenneinheit (104) in eine Antriebsbewegung der Transporteinheit (109) umlenkt.

11. Trenngerät (100) nach einem der Ansprüche 1 bis 10, wobei die Transporteinheit (109) mindestens zwei rotierbare Walzen (110) umfasst.

12. Trenngerät nach Anspruch 11, umfassend einen Mechanismus, der eine Bewegung der Aufnahmevorrichtung (103) und/oder der Trenneinheit (104) in eine Drehbewegung der Walzen umlenkt.

13. Trenngerät (100) nach einem der Ansprüche 1 bis 12, wobei die Transporteinheit (109) in Längsrichtung des mindestens einen Lichtwellenleiters (113) zwischen einer der mindestens zwei Klemmanordnungen (105) und dem Sammelbehälter (111) angeordnet ist.

14. Verfahren zum Durchtrennen mindestens eines Lichtwellenleiters (203), das aufweist:
- Festlegen eines Ambosses (202) im Raum;
- Fixieren des mindestens einen Lichtwellenleiters (203) in einer relativ zu dem Amboss (202) definierten Lage;
- Anritzen mindestens eines Lichtwellenleiters (203) an einer vorbestimmten Trennstelle (209);
- Drücken der Trennstelle (209) auf den festgelegten Amboss (202);
- Brechen des mindestens einen Lichtwellenleiters (203) an der Trennstelle (209) durch das Drücken der Trennstelle auf den festgelegten Amboss (202);
- Transport eines abgetrennten Teils (213) des mindestens einen Lichtwellenleiters (203) in einen Sammelbehälter (211).

15. Verfahren nach Anspruch 14, umfassend:
- Bewegen des Behälters (211) relativ zu dem mindestens einen Lichtwellenleiter (203).
